# EUROPÄISCHE PATENTSCHRIFT

(11) **EP 0 504 789 B1**
(45) Veröffentlichungstag und Bekanntmachung des Hinweises auf die Patenterteilung: **15.02.1995**
(21) Anmeldenummer: 92104559.7
(22) Anmeldetag: 17.03.1992
(51) Int. Cl.: B08B 15/02

(54) **Verfahren zur Geräteentsorgung und Einrichtungen dazu**
Method for removal of pieces of apparatus and devices therefor
Procédé et dispositifs pour enlever des appareillages

(30) Priorität: 22.03.1991 DE 4109496
(43) Veröffentlichungstag der Anmeldung: 23.09.1992
(73) Patentinhaber: KKW Kulmbacher Klimageräte-Werk GmbH, D-95326 Kulmbach (DE)
(72) Erfinder: Kaim, Leo, W-8647 Stockheim (DE); Gewand, Eckhard, W-8650 Kulmbach (DE); Kranz, Michael, W-8500 Nürnberg 60 (DE); Schmitz, Bernhard, W-2359 Henstedt-Ulzburg (DE); Vogel, Winfried, W-6669 Kleinbundenbach (DE); Weggel, Werner, W-8601 Wonsees (DE)
(74) Vertreter: Tergau, Enno, Dipl.-Ing.

(56) Entgegenhaltungen:
- EP-A- 0 491 992
- WO-A-91/10515
- GB-A- 2 223 200
- US-A- 4 928 581

## Beschreibung

Die Erfindung betrifft ein Verfahren zum Entsorgen von mit staubförmigen Partikeln verseuchten Geräten, insbesondere von Asbest-kontaminierten Elektro-Speicheröfen.

Es ist derzeit eine Vielzahl von Elektro-Speicheröfen mit integrierten Wärmedämmplatten aus Asbest-Werkstoff im Betrieb. In jüngerer Zeit hat sich herausgestellt, daß derartige Asbest-Gegenstände staubförmige Partikel absondern, die gesundheitsschädlich sind. Im Bereich eines jeden Ofens wird durch die Erwärmung der Umgebungsluft eine Luftströmung erzeugt, durch die Staubpartikel aus Asbest in die allgemeine Raumluft gelangen und eine gesundheitsgefährdende Wirkung auf die Bewohner ausüben können. Es hat sich daher ein Bedarf zur Entsorgung derartiger Geräte ergeben. Diese Entsorgung bereitet bei Elektro-Speicheröfen Probleme, weil diese in betriebsbereitem Zustand aufgrund der in ihnen als Wärmespeicher vorhandenen Schamottesteine ein erhebliches Eigengewicht aufweisen, welches einen Ausbau mit Entfernung als Ganzes in einem Stück unmöglich macht. Vielmehr ist es erforderlich, einen solchen in seiner Betriebs-Einbaustellung beispielsweise in einer Wohnung befindlichen Elektro-Speicherofen an Ort und Stelle in mehrere transportfähige Einzelteile zu zerlegen, bevor eine Entfernung möglich ist. Bei dieser Zerlegearbeit läßt sich der Anfall von gesundheitsschädlichem Asbest-Staub nicht vermeiden. Damit dieser mit dem zu entsorgenden Gerät gemeinsam aus dem bisherigen Aufstellraum entfernt wird, ist es bisher üblich, die Demontage derartiger Öfen in einem allseits geschlossenen, zeltartigen Raumgebilde von in Schutzanzüge mit Atemschutzmaske gekleidetem Fachpersonal vorzunehmen. Diese Art der abgeschirmten Demontage vor Ort und Entsorgung des Gerätes ist sehr aufwendig.

Der Erfindung liegt die Aufgabe zugrunde, ein Verfahren der eingangs genannten Art zu schaffen, durch welches unter voller Erhaltung des Gesundheitsschutzes auch für das die Entsorgung vornehmende Fachpersonal kein Austritt von mit staubförmigen Asbest-Partikeln kontaminierter Luft möglich ist, wodurch sich diese Staubpartikel im bisherigen Aufstellungsraum festsetzen und ihre gesundheitsschädliche Wirkung ausüben könnten. Diese Aufgabe wird durch das Kennzeichen des Anspruches 1 gelöst.

Der Lösungsgedanke ganz allgemein besteht also darin, das zu entsorgende Gerät zunächst vollständig staubdicht mit einem Hüllwerkstoff zu umhüllen, der indessen so flexibel und durchsichtig ausgestaltet ist, daß die Demontage des Gerätes in transportable Einzelteile von außen durch die Folie hindurch bewerkstelligt werden kann. Dadurch kann das Fachpersonal ohne besondere Schutzanzüge, auch ohne Atemschutzmasken arbeiten. Die durch Demontage vom Gerät separierten Einzelteile werden beispielsweise durch eine Materialschleuse in selbst staubdichte Aufnahmebehältnisse, z.B. Foliensäcke oder - schläuche eingeführt, die ihrerseits staubdicht mit demjenigen Umgebungsbereich der Hüllwand des Hüllkörpers verbindbar sind, der die Materialschleuse umgibt. Selbst bei einem kleinen Leck in der Verbindung eines solchen Aufnahme- oder Transportbehältnisses mit der Hüllfolie ist aufgrund des innerhalb des Hüllraumes durch Staubsaugeranschluß herrschenden Unterdruckes im Leckbereich ein Entweichen von mit Asbest-Staub kontaminierter Luft nicht zu besorgen. Wenn auf diese Weise das von demontierten Einzelteilen, z.B. Schamottesteinen, befreite Restgerät auf ein transportierbares Eigengewicht reduziert ist, wird der aufgebaute Hüllmantel als bleibende Transporthülle weiter verwendet, die auch während des Transportes des Restgerätes einen Staubaustritt verhindert. Während des Transportes indessen bedarf es keines weiteren Anschlusses an einen in Betrieb befindlichen Staubsauger. Vielmehr kann die Anschlußöffnung für den Staubsauger, beispielsweise ein angeformter Folienschlauch einfach abgebunden werden, um danach in diesem Bereich einen weiteren Staubaustritt aus dem Hüllraum zu vermeiden.

Um die Demontage zu erleichtern und eine Beschädigung der staubdichten Hülle zu vermeiden, kann es zweckmäßig sein, die Seitenwände und die Deckwand der Hülle in einem Abstand von den Gerätewänden zu halten. Dies ist möglich durch nach Art von Zeltschnüren an der Hülle angebrachte Schnüre, mit denen die leichtgewichtige Hülle an Wänden oder anderen Einrichtungsgegenständen des Aufstellraumes befestigbar ist. Denkbar ist indessen auch die Aussteifung bzw. Figurierung der Folienhülle durch ein Rahmengestell, welches aus einzelnen Rahmenteilen und gegebenenfalls Knotenpunkten zusammensteckbar ist. Dabei ist dann dieses Rahmengestell wie das Gerät selbst innerhalb des Hüllraumes positionierbar. Der Aufbau des Rahmengestells durch Zusammenstecken der Einzelteile kann von außen durch die Folienwände hindurch in gleicher Weise wie die Demontage des Gerätes vorgenommen werden.

Die weitere Erfindung betrifft den Folienzuschnitt zur Erstellung des Hüllraumes sowie weitere für die Verfahrensdurchführung zweckmäßige Hilfsgegenstände und Hilfsgestaltungen.

Der Erfindungsgegenstand wird anhand der Figuren beispielsweise erläutert. Es zeigen:
- Fig. 1: die perspektivische Darstellung eines mit einer Folienhülle staubdicht umgebenen Elektro-Speicherofens in für eine Demontage in transportable Einzelteile vorbereiteter Form.
- Fig. 2: eine vergrößerte Darstellung des Eckbereiches II in Fig. 1 mit dem Knoten eines die Hüllfolie von innen haltenden Rahmengestells.
- Fig. 3: die Draufsicht auf einen Raum-Fußboden mit ausgebreiteter, den Folienzuschnitt zeigender Folie vor der Aufnahme des zu entsorgenden Gerätes und, vor deren Zusammenlegung zur Bildung einer Umhüllung.

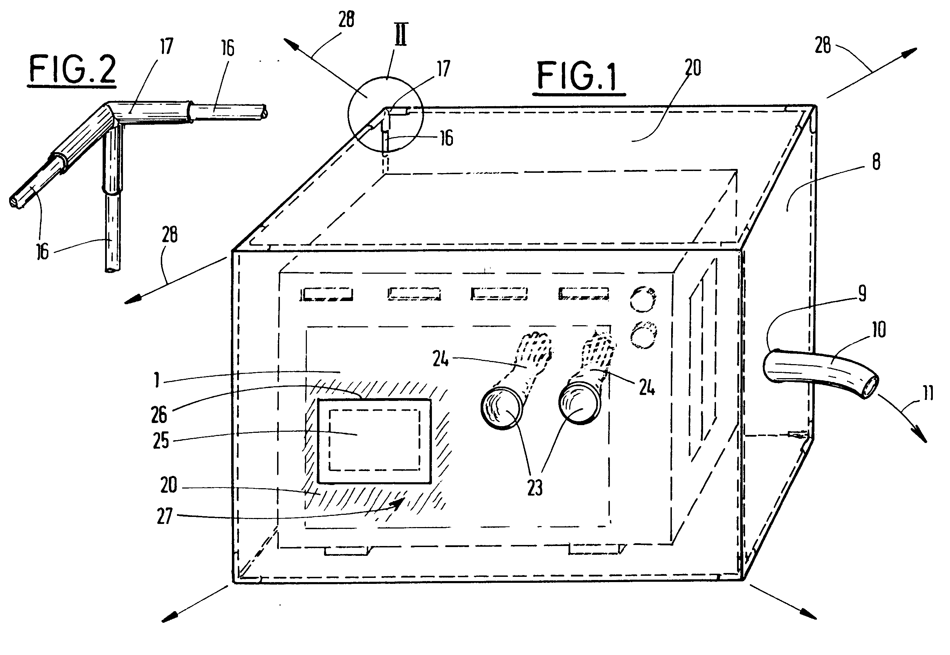

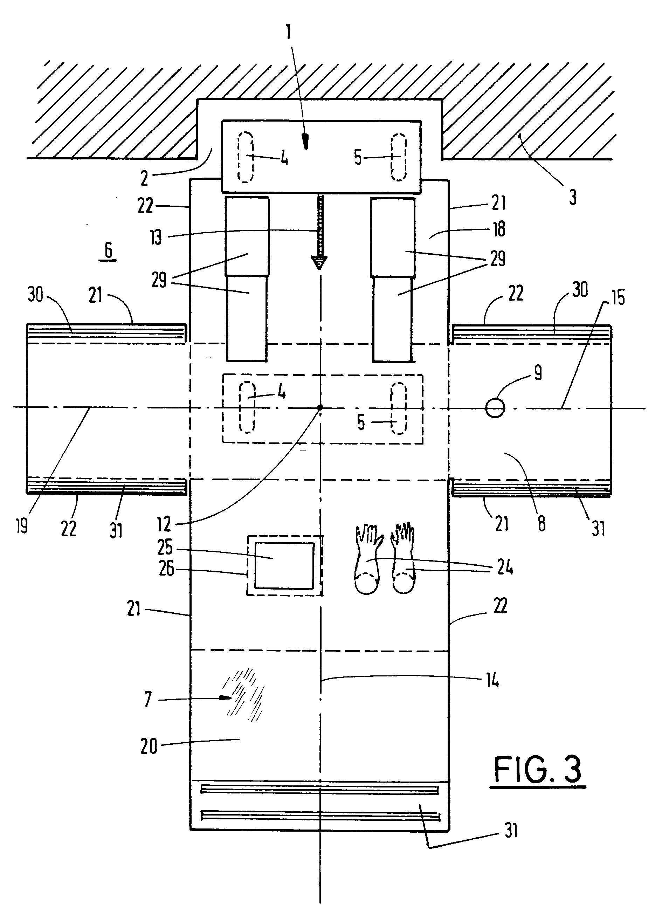

Die Draufsicht in Fig. 3 zeigt den nachstehend kurz als Gerät 1 bezeichneten Elektro-Speicherofen in seiner Einbaustellung in der Nische 2 einer Gebäudewand 3. Das Gerät 1 steht mit seinen Füßen 4, 5 auf dem Boden 6 des Aufstellraumes. Vor dem Gerät 1 ist auf dem Boden 6 eine Folie 7 aus flexiblem, durchsichtigem Werkstoff, insbesondere eine Kunststoffolie ausgebreitet. Der Folienzuschnitt weist dabei im wesentlichen die Form eines lateinischen Kreuzes auf. Der Zuschnitt der Folie 7 weist in seinem rechten Schenkel 8 einen kreisförmigen Durchtritt 9 auf, an dessen dem Betrachter abgewandter und dem Boden 6 zugewandter Seite ein ebenfalls staubdichter Schlauch 10 staubdicht angesetzt ist. Der Schlauch 10 dient zum Anschluß eines nicht dargestellten Staubsaugers, dessen Saugrichtung 11 in Fig. 1 durch einen Pfeil gekennzeichnet ist.

In seinem in Fig. 3 dargestellten Einbauzustand weist das Gerät 1 ein Eigengewicht auf, welches eine Transportierbarkeit ohne mechanische Hilfsmittel nicht bzw. kaum ermöglicht.

Um das Gerät 1 aus seiner Einbaustellung gemäß Fig. 1 in die Mitte 12 der Folie 7 in Pfeilrichtung 13 zu verschieben, werden diese Verschiebung begünstigende und die Folie 7 vor Beschädigung bewahrende Rutschbleche 29 auf dem Verschiebeweg ausgelegt, den die Füße 4, 5 des Gerätes 1 bei ihrer Verschiebung in Pfeilrichtung 13 zur Mitte 12 hin zu durchmessen haben. Das Gerät 1 ist in Fig. 3 in seiner Verschiebeendstellung gestrichelt dargestellt, in der es über der Mitte 12 der Folie 7 steht. Die Mitte 12 ist etwa der Schnittpunkt der Mittellängsachsen 14, 15 des Vertikal- und des Horizontalbalkens der lateinischen Kreuzform des Zuschnittes der Folie 7.

In der gestrichelten Verschiebeendstellung über der Mitte 12 der Folie 7 wird ein das Gerät 1 mit Abstand umgebendes, kastenförmiges Rahmengestell aus einzelnen Rahmenstreben 16 und Eckknoten 17 zusammengesteckt. Die Rahmenstreben 16 können auch mehrteilig ausgebildet sein derart, daß mehrere in Längsrichtung aneinandergesteckte Strebenteile eine Rahmenstrebe 16 in voller Länge bilden.

Sodann erfolgt die Umhüllung des über der Mitte 12 der Folie 7 stehenden Gerätes 1, indem die Schenkel 8, 18, 19 und 20 auf ihrer Auflage aus dem Boden 6 etwa lotrecht nach oben hochgeschwenkt werden. Danach werden die Schenke 8, 18-20 des Zuschnittes der Folie 7 im Bereich ihrer seitlichen Randkanten 21, 22 miteinander staubdicht verbunden. Dazu sind die Randkanten 21, 22 der Schenkel 8, 18-20 mit vorkonfektionierten Verbindungsmitteln beispielsweise in Form von Klettbändern 30 , 31, eines Reißverschlusses oder eines Klebstreifens versehen. Es kann diese staubdichte Kantenverbindung auch durch Verkleben mit gesonderten Klebestreifen erfolgen, wobei die Kanten durch die Rahmenstreben 16 ausgesteift sind. Das äußere Ende des langen Schenkels 20 des Zuschnitts der Folie 7 wird dann noch zur Bildung einer Decke in eine Horizontallage oberhalb des Gerätes 1 herumgeschwenkt. Anschließend erfolgt die Randkantenverbindung auch der Decke in der vorstehend erläuterten Weise, so daß am Ende ein staubdichter Folienkasten als Hüllraum das Gerät umgibt, und zwar beim Ausführungsbeispiel mit Abstand von den Seitenwänden und von der Deckwand des Gerätes 1.

Nunmehr wird der Staubsauger angestellt, der einen Unterdruck im derart hergestellten, staubdichten Hüllraum erzeugt.

Die Folie 7 kann im Bereich ihrer Schenkel 18, 20, beispielsweise in halber Höhe nach der Erstellung des Hüllraumes (Fig. 1) mit Grifföffnungen 23 versehen sein, an die auf der Innenseite jeweils ein handschuhartig wirksamer Manipulationssack 24 angeformt ist. Diese Manipulationssäcke brauchen nicht unbedingt an ihrem Sackende mit Fingereinlagen versehen zu sein, wie dies zeichnerisch dargestellt ist. Eine solche fingerartige Bodenausformung der Manipulationssäcke 24 kann indessen gegebenenfalls die nunmehr einsetzende Demontage des Gerätes 1 erleichtern. Die Länge der Manipulationssäcke 24 ist zweckmäßig so bemessen, daß sämtliche für die Geräte-Demontage erforderlichen Bereiche des Hüllraumes bzw. des in ihm einliegenden Gerätes 1 manipulationsmäßig erreichbar sind.

Mit der durch die Manipulationssäcke 24 hindurch erfolgenden Demontage des Gerätes 1 müssen zur Gewichtserleichterung demonierte Einzelteile aus dem Hüllraum separiert werden. Dazu ist die im Ausgangszustand verschlossene Materialöffnung 25 vorhanden. An den die staubdichte Verschlußabdeckung 26 umgebenden, in Fig. 1 durch Schraffur kenntlich gemachten Folienbereich 27 wird wiederum staubdicht beispielsweise durch Verklebung ein sackartiger Schlauch (nicht dargestellt) von außen angesetzt, in den demontierte Einzelteile aus dem Hüllraum durch die Materialöffnung 25 hindurch hineingeschoben werden. Bei einem Elektro-Speicherofen werden dies in erster Linie Schamottesteine sein. Diese können einzeln oder zu mehreren jeweils bis zum Sackboden des Schlauches geschoben werden. Die dem Sackboden gegenüberliegende Seite des Sackschlauches kann dann abgebunden und abgeschnitten werden, so daß eine staubdicht verpackte Einzelportion eines Gerätebestandteiles vorliegt, welches in dieser Form staubdicht und somit gesundheitsunschädlich aus dem Aufstellraum des Gerätes 1 entfernbar ist. In dieser Weise können Zug um Zug Innenteile des Gerätes 1 staubdicht verpackt dem Hüllraum entnommen werden.

Ist auf diese Weise das Restgerät 1 so weit ausgeschlachtet, daß es ohne mechanische Hilfsmittel transportierbar ist, wird auch der Saugschlauch 10 abgebunden, durch den bis dahin das Hüllrauminnere unter Unterdruck gehalten wurde. Der Schlauch 10 wird außerhalb seiner staubdichten Abbindung abgeschnitten. Der aus den Rahmenstreben 16 und den Eckknoten 17 gebildete Rahmen wird in seine Einzelteile zerlegt und das Gerät 1 und die Rahmenteile werden in der staubdichten Umhüllung entfernt. Die Umhüllung ist ein Einweg-Teil, welches mit dem Restgerät entsorgt wird.

Anstelle eines den Hüllraum figurierenden Rahmens aus Rahmenstreben 16 und Eckknoten 17 können auch von außen in den Eckbereichen des Hüllraumes Zugmittel 28 zur zeltartigen Verspannung angreifen.

### Bezugszeichenliste

- 1: Gerät
- 2: Nische
- 3: Gebäudewand
- 4: Fuß
- 5: Fuß
- 6: Boden
- 7: Folie
- 8: Schenkel
- 9: Durchtritt
- 10: Schlauch
- 11: Saugrichtung
- 12: Mitte
- 13: Pfeilrichtung
- 14: Mittellängsachse
- 15: Mittellängsachse
- 16: Rahmenstrebe
- 17: Eckknoten
- 18: Schenkel
- 19: Schenkel
- 20: Schenkel
- 21: Randkanten
- 22: Randkanten
- 23: Grifföffnung
- 24: Manipulationssack
- 25: Materialöffnung
- 26: Verschlußabdeckung
- 27: Folienbereich
- 28: Zugmittel
- 29: Rutschbleche
- 30: Klettband
- 31: Klettband

## Patentansprüche

1. Verfahren zum Entsorgen von mit staubförmigen Partikeln verseuchten Geräten (1), insbesondere von Asbest-kontaminierten Elektro-Speicheröfen,
dadurch gekennzeichnet, daß
a) das Gerät (1) vollständig und staubdicht mit einer flexiblen, durchsichtigen Folie (7) umgeben wird,
b) der abgeschottete, das Gerät (1) enthaltende Hüllraum z. B. durch einen Staubsauger unter Unterdruck gehalten wird,
c) das Gerät (1) gegebenenfalls unter Zuhilfenahme von im Hüllraum befindlichen Werkzeugen durch von der Außenseite der Folie (7) her erfolgendes Manipulieren demontiert wird und
d) demontierte Einzelteile im Bereich einer staubdicht verschließbaren, in die Folie (7) eingebrachten Materialöffnung (25) in staubdicht angesetzte, staubdicht separierbare sowie selbst staubdichte Aufnahmebehältnisse überführt werden, bevor nach dem Abklemmen des Staubsaugers
e) das Restgerät in der Hülle staubdicht verpackt mit dieser entfernt wird.

2. Verfahren nach Anspruch 1,
dadurch gekennzeichnet, daß
die staubdicht verschlossene Folienhülle durch ein Rahmengestell (16,17) zu einer Raumzelle vorbestimmter Abmessungen figuriert ist.

3. Verfahren nach Anspruch 2,
dadurch gekennzeichnet, daß
das Rahmengestell (16,17) innerhalb der Folienhülle angeordnet und aus Einzelteilen lösbar zusammengesetzt, insbesondere aus Rahmenstreben (16) und/oder Eckknoten (17) zusammengesteckt ist.

4. Verfahren nach Anspruch 1,
dadurch gekennzeichnet, daß
die staubdicht verschlossene Folienhülle durch von außen an Eckpunkten nach Art von Zeltschnüren angreifende Zugmittel zu einer Raumzelle vorbestimmter Abmessungen figuriert ist.

5. Folie Verwendung einer zur Durchführung des Verfahrens nach einem der Ansprüche 1-4,
dadurch gekennzeichnet, daß die Folie ein Zuschnitt mit Umrißform eines lateinischen Kreuzes ist.

6. Verwendung nach Anspruch 5,
dadurch gekennzeichnet, daß
die Randkanten (21,22) mit vorkonfektionierten Verbindungsmitteln zur staubdichten Folienverbindung bei der Herstellung des Hüllraumes versehen sind.

7. Verwendung nach Anspruch 6,
dadurch gekennzeichnet, daß
die Verbindungsmittel ein Reiß- oder Klettverschlußband oder Klebestreifen sind.

8. Verwendung nach Anspruch 5 oder 6,
gekennzeichnet durch
einen Durchtritt (9) zum staubdichten Anschluß eines Saugschlauches (10) für einen Staubsauger.

9. Verwendung nach einem oder mehreren der vorhergehenden Ansprüche,
gekennzeichnet durch
eine Materialöffnung (25) mit einer auf der Außenseite angebrachten, lösbaren Verschlußabdeckung (26) im Bereich eines Schenkels (20).

10. Verwendung nach einem oder mehreren der vorhergehenden Ansprüche,
gekennzeichnet durch
mindestens einen Manipulationssack (24) auf der im Hüllzustand innenliegenden Seite eines Schenkels (20).

## Claims

1. A method for the disposal of appliances (1) contaminated by dust-like particles, in particular of asbestos-contaminated electric storage stoves,
characterized in that
a) the appliance (1) is completely surrounded in a dustproof manner by a flexible transparent sheet (7),
b) thee partitioned-off wrapping space containing the appliance (1) is kept at low pressure, for example by a vacuum cleaner,
c) the appliance (1) is dismantled, if necessary by using tools situated in the wrapping space, by a manipulation that is effected from the outside of the sheet (7), and
d) in the zone of a material opening (25) that is closable in a dustproof manner and is inserted into the sheet (7), dismantled individual parts are transferred into receiving containers that can be applied in a dustproof manner and be separated off in a dustproof manner, which are themselves dustproof, before, after disconnection of the vacuum cleaner,
e) the rest of the appliance is packed in the wrapping in a dustproof manner and is removed together with it.

2. A method according to claim 1,
characterized in that
the sheet wrapping, which is enclosed in a dustproof manner, is configured by a frame structure (16, 17) into a cell compartment of predetermined dimensions.

3. A method according to claim 2,
characterized in that
the frame structure (16, 17) is arranged inside the sheet wrapping and is detachably composed of individual components and is, in particular, fitted together from frame rods (16) and/or corner fittings (17).

4. A method according to claim 1,
characterized in that
the sheet wrapping that is enclosed in a dustproof manner is configured into a cell compartment of predetermined dimensions by tensioning means acting from the outside an corner points in the manner of tent strings.

5. Use of a sheet for operating the method according to one of claims 1 - 4,
characterized in that
the sheet is a blank with the outline of a Latin cross.

6. Use according to claim 5,
characterized in that
the lateral edges (21, 22) are provided with ready-made connecting means for connecting the sheet in a dustproof manner when the wrapping space is set up.

7. Use according to claim 6,
characterized in that
the connecting means are a zip fastener strip or loop and hook fabric fastener strip or an adhesive strip.

8. Use according to claim 5 or 6,
characterized by
an opening (9) for the dustproof connection of a suction hose (10) for a vacuum cleaner.

9. Use according to one or more of the preceding claims,
characterized by
a material opening (25) with a detachable obturating cover (26) fitted on the outside in the zone of one side (20).

10. Use according to one or more of the preceding claims,
characterized by
at least one manipulating pouch (24) lying in the wrapping state on the inside of one side (20).

## Revendications

1. Procédé d'enlèvement d'appareils (1) contaminés par des particules de poussière, en particulier de radiateurs électriques à accumulation contaminés par de l'amiante, caractérisé en ce que
a) l'appareil (1) est enveloppé entièrement et de manière étanche aux poussières avec une feuille (7) transparente flexible,
b) l'enveloppe hermétiquement fermée contenant l'appareil (1) est maintenue sous dépression, par exemple au moyen d'un aspirateur,
c) l'appareil (1) est démonté par manipulation s'effectuant de l'extérieur de la feuille (7), le cas échéant à l'aide d'outils se trouvant dans l'enveloppe, et
d) des pièces détachées démontées sont transférées dans la région d'une ouverture de matériel (25) qui peut être fermée de manière étanche aux poussières, et qui est ménagée dans la feuille (7), dans des réceptacles eux-mêmes étanches aux poussières, qui sont rapportés de manière étanche aux poussières et peuvent être séparés de manière étanche aux poussières, avant que, après avoir déconnecté l'aspirateur,
e) le reste de l'appareil soit emballé dans l'enveloppe de manière étanche aux poussières et soit enlevé avec celle-ci.

2. Procédé selon la revendication 1, caractérisé en ce que l'enveloppe en feuille fermée de manière étanche aux poussières est façonnée grâce à un cadre (16, 17), sous la forme d'une cellule de dimensions prédéterminées.

3. Procédé selon la revendication 2, caractérisé en ce que le cadre (16, 17) est agencé à l'intérieur de l'enveloppe en feuille et assemblé de manière détachable à partir de pièces individuelles, en particulier de traverses (16) et/ou de raccords angulaires (17) enfichables.

4. Procédé selon la revendication 1, caractérisé en ce que l'enveloppe en feuille fermée de manière étanche aux poussières est façonnée pour former une cellule de dimensions prédéterminées, grâce à des moyens de traction attaquant les points d'angles de l'extérieur à la manière de cordes de tente.

5. Utilisation d'une feuille pour exécuter le procédé selon l'une quelconque des revendications 1 à 4, caractérisée en ce que la feuille a une découpe formant le contour d'une croix latine.

6. Utilisation selon la revendication 5, caractérisée en ce que les arêtes (21,22) de bordure sont pourvues de moyens de raccord préconfectionnés servant lors de la réalisation de l'enveloppe à une liaison des feuilles étanche aux poussières.

7. Utilisation selon la revendication 6, caracterisée en ce que les moyens de raccord sont une bande de fermeture à glissière, ou une bande de fermeture agrippante, ou une bande adhésive.

8. Utilisation selon l'une ou l'autre des revendications 5 ou 6, caractérisée par un passage (9) de raccord étanche aux poussières d'un tuyau d'aspiration (10) pour un aspirateur.

9. Utilisation selon l'une quelconque ou plusieurs des revendications précédentes, caractérisée par une ouverture de matériel (25) avec un couvercle de fermeture (26) détachable situe dans la région d'une face et monté sur la face extérieure.

10. Utilisation selon l'une quelconque ou plusieurs des revendications précédentes, caractérisée par au moins un sac de manipulation (24) sur le côté d'une face (20), situé à l'intérieur à l'état d'enveloppe.
